# EUROPEAN PATENT SPECIFICATION

(11) **EP 1 488 389 B1**
(45) Date of publication and mention of the grant of the patent: **21.05.2008**
(21) Application number: 02725356.6
(22) Date of filing: 28.03.2002
(51) Int. Cl.: G07F 17/32

(54) **SYSTEM FOR INTERFACING A USER AND A CASINO GAMING MACHINE**
SYSTEM ZUR SCHNITTSTELLENBILDUNG ZWISCHEN EINEM BENUTZER UND EINEM SPIELAUTOMAT
SYSTEME D'INTERFA AGE ENTRE UN UTILISATEUR ET UNE MACHINE DE JEU DE CASINO

(43) Date of publication of application: 22.12.2004
(60) Divisional application: 08100588.6
(73) Proprietor: IGT, Reno, Nevada 89511 (US)
(72) Inventor: WELLS, William, Reno, NV 89502 (US)
(74) Representative: Körber, Martin Hans
(86) International application number: PCT/US2002/009293
(87) International publication number: WO 2003/088164

(56) References cited:
- EP-A- 1 063 622
- EP-A- 1 074 935
- EP-A- 1 081 633
- EP-A- 1 083 531
- WO-A-01/57579
- DE-A- 4 436 171
- GB-A- 2 251 112
- US-A- 6 028 271
- US-A1- 2001 040 733
- US-B1- 6 210 279

## Description

### Background

A video gaming machine employing both touch screen buttons and electromechanical buttons to permit a number of different games to be played on the same machine is disclosed in U.S. Patent No. 5,342,047. The video gaming machine accepts inputs from both the touch screen and the electromechanical game buttons to control games played on the machine. In order to indicate the function of a touch screen or electromechanical button, each button is provided with an input label. The video gaming machine is capable of playing a number of different games. When the game being played changes, both the touch screen input labels and the electromechanical button labels may change under machine control.

In order to change the electromechanical button labels, each electromechanical button includes a translucent label, two light filters, and two light sources. The translucent label is etched with labels having indicia that are responsive to two different colors of light. The light filters are placed below the translucent label. The two light sources are different colors. When one light source is energized, the translucent label displays one of the indicia. When the other light source is energized, the translucent label displays the other the indicia. In this manner, the video gaming machine may change the electromechanical button labels to correspond to the game displayed on the touch screen. Document EP 1063622 A2 relates to a gaming machine with multiple payoff modes and award presentation schemes. The gaming machine is used to implement a basic game and a bonus game. The gaming machine includes a video display which can comprise a touch-screen CRT display. For operating the gaming machine a CPU is provided. A coin/credit detector signals the CPU when a player has inserted a number of coins or played a number of credits. Then, the CPU operates to execute a basic game program which causes the video display to display the basic game which includes simulated reels with symbols displayed thereon. For selecting an item displayed on the touch-screen display the player touches the screen over the selected item.

### Summary of the Invention

Claim 1 discloses the present invention. Preferred embodiments are disclosed in claims 2-21. The gaming apparatus may further comprise slot machine reels; and wherein the controller is operatively coupled to the slot machine reels, display unit, the value input device, and the transparent touch screen surface.

The transparent switch may comprise a polyurethane lens or a pliable silicon membrane. The transparent switch may be structured to magnify the displayed input indicator. The display unit may comprise a liquid crystal display and/or a cathode ray tube. The controller may be programmed to cause the input indicator to depict a first image during play of a first casino game and a second image during play of a second casino game, wherein the first image is different than the second image, and the first casino game is different than the second casino game. Similarly, the controller may be programmed to cause the input indicator to depict a first image during a first game mode and a second image during play a second game mode, wherein the first image is different than the second image, and the first casino game is different than the second casino game. The controller may be programmed to cause the input indicator to change periodically. The transparent touch screen surface may be a resistive touch screen surface and/or a capacitive touch screen surface. The display unit may include a non-input portion, wherein the transparent touch screen surface does not cover the non-input portion. The gaming apparatus may also be connected to other gaming apparatuses via a network such as the Internet. The controller may be programmed to operate a game selected from the group of games consisting of video poker, video blackjack, video slots, video keno and video bingo.

The gaming apparatus may further comprise another display unit capable of generating video images, wherein the controller is operatively coupled to the other display unit, the controller being programmed to cause the other display unit to display a first image associated with the game the controller being programmed to cause the display unit to display a second image associated with the game, the second image being visible through the transparent switch member.

The transparent switch member may comprise a polyurethane lens structured to magnify the second image. The controller may further be programmed to select the second image from a plurality of images based on a setup input indicative of the casino game. The controller may further be programmed to periodically change the second image.

Additional aspects of the invention will be apparent to those of ordinary skill in the art in view of the detailed description of various embodiments, which is made with reference to the drawings, a brief description of which is provided below.

### Brief Description of the Drawings

Fig. 1 is a block diagram of an embodiment of a gaming system in accordance with the invention;
Fig. 2 is a perspective view of an embodiment of one of the gaming units shown schematically in Fig. 1;
Fig. 2A illustrates an embodiment of a control panel for a gaming unit;
Fig. 2B is a top plan view of a plurality of dynamic buttons;
Fig. 2C is a cross-sectional view of the plurality of dynamic buttons taken along line C-C of Fig. 2C;
Fig. 2D is an exploded cross-sectional view of a plurality of dynamic buttons;
Fig. 2E is an enlarged fragmentary cross-sectional view of a tactile feedback portion taken about the circumscribed portion of Fig. 2D.
Fig. 2F is an illustration of an embodiment of buttons that may be displayed during performance of a video slots routine;
Fig. 2G is an illustration of an embodiment of buttons that may be displayed during performance of a video poker routine;
Fig. 3 is a block diagram of the electronic components of the gaming unit of Fig. 2;
Fig. 4 is a flowchart of an embodiment of a main routine that may be performed during operation of one or more of the gaming units;
Fig. 5 is a flowchart of an alternative embodiment of a main routine that may be performed during operation of one or more of the gaming units;
Fig. 6 is an illustration of an embodiment of a visual display that may be displayed during performance of the video poker routine of Fig. 8;
Fig. 7 is an illustration of an embodiment of a visual display that may be displayed during performance of the video blackjack routine of Fig. 9;
Fig. 8 is a flowchart of an embodiment of a video poker routine that may be performed by one or more of the gaming units;
Fig. 9 is a flowchart of an embodiment of a video blackjack routine that may be performed by one or more of the gaming units;
Fig. 10 is an illustration of an embodiment of a visual display that may be displayed during performance of the slots routine of Fig. 12;
Fig. 11 is an illustration of an embodiment of a visual display that may be displayed during performance of the video keno routine of Fig. 13;
Fig. 12 is a flowchart of an embodiment of a slots routine that may be performed by one or more of the gaming units;
Fig. 13 is a flowchart of an embodiment of a video keno routine that may be performed by one or more of the gaming units;
Fig. 14 is an illustration of an embodiment of a visual display that may be displayed during performance of the video bingo routine of Fig. 15; and
Fig. 15 is a flowchart of an embodiment of a video bingo routine that may be performed by one or more of the gaming units.

### Detailed Description of Various Embodiments

Although the following text sets forth a detailed description of numerous different embodiments of the invention, it should be understood that the detailed description is to be construed as exemplary only and does not describe every possible embodiment of the invention. Numerous alternative embodiments could be implemented, using either current technology or technology developed after the filing date of this patent.

It should also be understood that, unless a term is expressly defined in this patent using the sentence "As used herein, the term ' ' is hereby defined to mean..." or a similar sentence, there is no intent to limit the meaning of that term, either expressly or by implication, beyond its plain or ordinary meaning. To the extent that any term recited in the claims at the end of this patent is referred to in this patent in a manner consistent with a single meaning, that is done for sake of clarity only so as to not confuse the reader, and it is not intended that such claim term be limited, by implication or otherwise, to that single meaning.

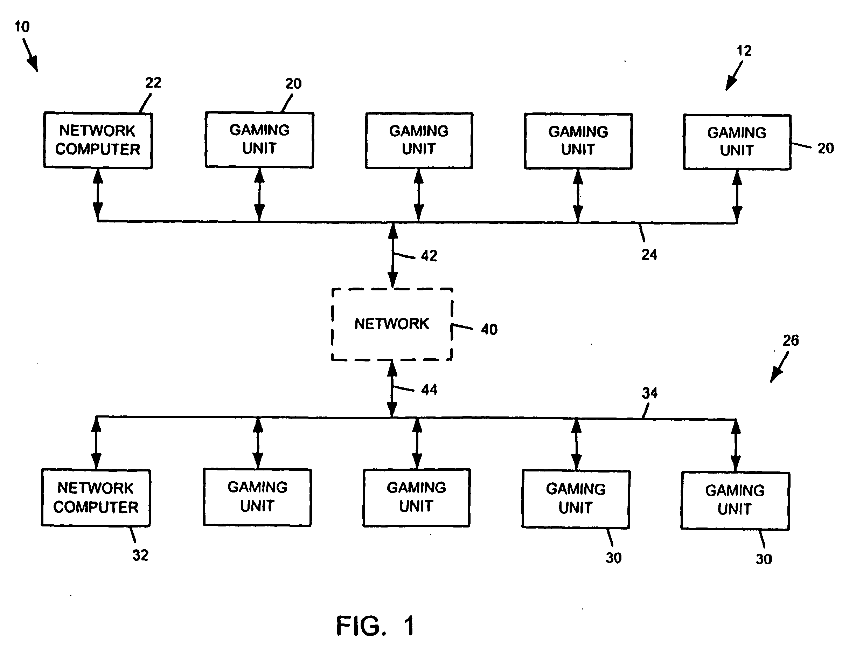

Fig. 1 illustrates an embodiment of a casino gaming system 10 in accordance with the invention. In this embodiment, the casino gaming system 10 may include a first group or network 12 of casino gaming units 20 operatively coupled to a network computer 22 via a network data link or bus 24. The casino gaming system 10 may include a second group or network 26 of casino gaming units 30 operatively coupled to a network computer 32 via a network data link or bus 34. The first and second gaming networks 12, 26 may be operatively coupled to each other via a network 40, which may comprise, for example, the Internet, a wide area network (WAN), or a local area network (LAN) via a first network link 42 and a second network link 44.

The first network 12 of gaming units 20 may be provided in a first casino, and the second network 26 of gaming units 30 may be provided in a second casino located in a separate geographic location than the first casino. For example, the two casinos may be located in different areas of the same city, or they may be located in different states. The network 40 may include a plurality of network computers or server computers (not shown), each of which may be operatively interconnected. Where the network 40 comprises the Internet, data communication may take place over the communication links 42, 44 via an Internet communication protocol.

The network computer 22 may be a server computer and may be used to accumulate and analyze data relating to the operation of the gaming units 20. For example, the network computer 22 may continuously receive data from each of the gaming units 20 indicative of the dollar amount and number of wagers being made on each of the gaming units 20, data indicative of how much each of the gaming units 20 is paying out in winnings, data regarding the identity and gaming habits of players playing each of the gaming units 20, etc. The network computer 32 may be a server computer and may be used to perform the same or different functions in relation to the gaming units 30 as the network computer 22 described above.

Although each network 12, 26 is shown to include one network computer 22, 32 and four gaming units 20, 30, it should be understood that different numbers of computers and gaming units may be utilized. For example, the network 12 may include a plurality of network computers 22 and tens or hundreds of gaming units 20, all of which may be interconnected via the data link 24. The data link 24 may provided as a dedicated hardwired link or a wireless link. Although the data link 24 is shown as a single data link 24, the data link 24 may comprise multiple data links.

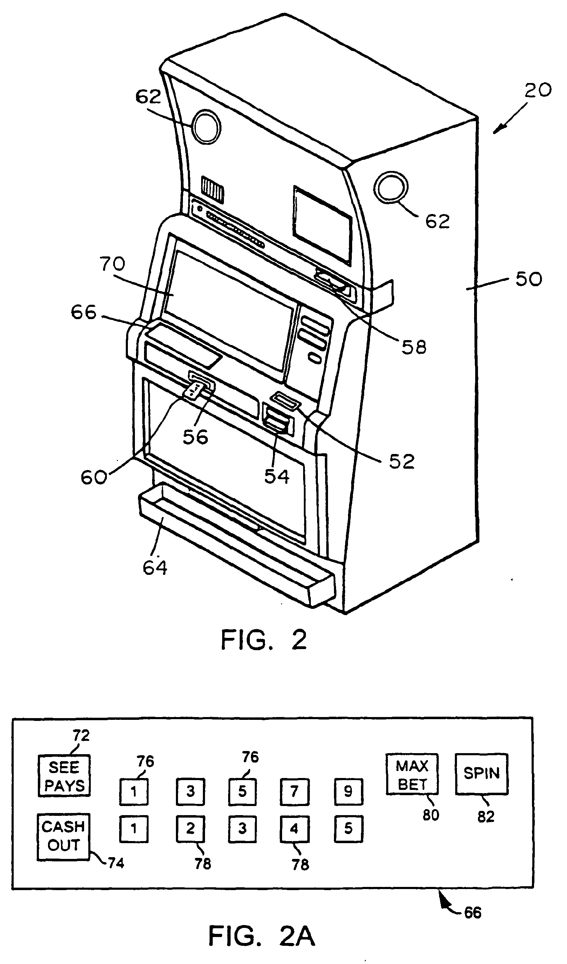

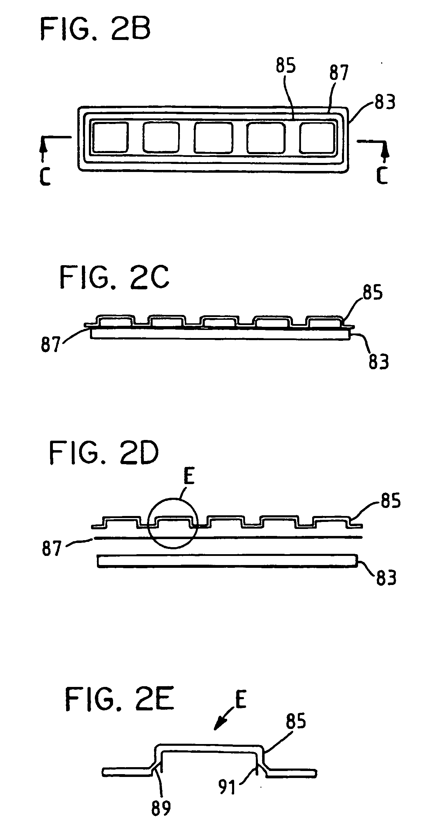

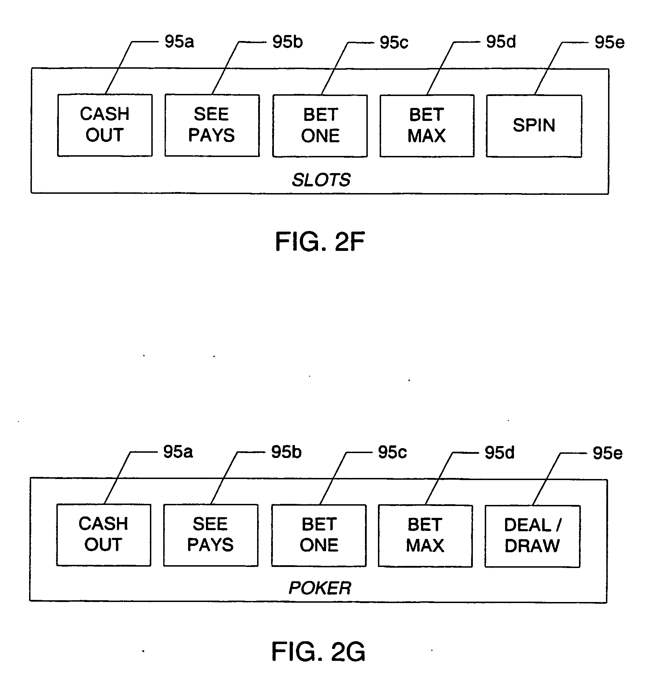

Fig. 2 is a perspective view of one possible embodiment of one or more of the gaming units 20. Although the following description addresses the design of the gaming units 20, it should be understood that the gaming units 30 may have the same design as the gaming units 20 described below. It should be understood that the design of one or more of the gaming units 20 may be different than the design of other gaming units 20, and that the design of one or more of the gaming units 30 may be different than the design of other gaming units 30. Each gaming unit 20 may be any type of casino gaming unit and may have various different structures and methods of operation. For exemplary purposes, various designs of the gaming units 20 are described below, but it should be understood that numerous other designs may be utilized.

Referring to Fig. 2, the casino gaming unit 20 may include a housing or cabinet 50 and one or more input devices, which may include a coin slot or acceptor 52, a paper currency acceptor 54, a ticket reader/printer 56 and a card reader 58, which may be used to input value to the gaming unit 20. A value input device may include any device that can accept value from a customer. As used herein, the term "value" may encompass gaming tokens, coins, paper currency, ticket vouchers, credit or debit cards, and any other object representative of value.

If provided on the gaming unit 20, the ticket reader/printer 56 may be used to read and/or print or otherwise encode ticket vouchers 60. The ticket vouchers 60 may be composed of paper or another printable or encodable material and may have one or more of the following informational items printed or encoded thereon: the casino name, the type of ticket voucher, a validation number, a bar code with control and/or security data, the date and time of issuance of the ticket voucher, redemption instructions and restrictions, a description of an award, and any other information that may be necessary or desirable. Different types of ticket vouchers 60 could be used, such as bonus ticket vouchers, cash-redemption ticket vouchers, casino chip ticket vouchers, extra game play ticket vouchers, merchandise ticket vouchers, restaurant ticket vouchers, show ticket vouchers, etc. The ticket vouchers 60 could be printed with an optically readable material such as ink, or data on the ticket vouchers 60 could be magnetically encoded. The ticket reader/printer 56 may be provided with the ability to both read and print ticket vouchers 60, or it may be provided with the ability to only read or only print or encode ticket vouchers 60. In the latter case, for example, some of the gaming units 20 may have ticket printers 56 that may be used to print ticket vouchers 60, which could then be used by a player in other gaming units 20 that have ticket readers 56.

If provided, the card reader 58 may include any type of card reading device, such as a magnetic card reader or an optical card reader, and may be used to read data from a card offered by a player, such as a credit card or a player tracking card. If provided for player tracking purposes, the card reader 58 may be used to read data from, and/or write data to, player tracking cards that are capable of storing data representing the identity of a player, the identity of a casino, the player's gaming habits, etc.

The gaming unit 20 may include one or more audio speakers 62, a coin payout tray 64, an input control panel 66, and a main display unit 70. The audio speakers 62 may generate audio representing sounds such as the noise of spinning slot machine reels, a dealer's voice, music, announcements or any other audio related to a casino game. The main display unit 70 displays images relating to the game or games provided by the gaming unit 20. The main display unit 70 may be a color video display such as a liquid crystal display (LCD) or a cathode ray tube (CRT).

Fig. 2A illustrates one possible embodiment of the control panel 66, which may be used where the gaming unit 20 is a slot machine having a plurality of mechanical or "virtual" reels. The input control panel 66 may be provided with a plurality of buttons 72, 74, 76, 78, 80, 82. The buttons 72, 74, 76, 78, 80, 82 may be dynamic buttons and/or static buttons. The buttons 72, 74, 76, 78, 80, 82 may be activated by a player to select games, make wagers, make gaming decisions, etc. Although the control panel 66 is shown to be separate from the main display unit 70, it should be understood that the control panel 66 could be generated by the main display unit 70.

The control panel 66 may include a "See Pays" button 72 that, when activated, causes the main display unit 70 to generate one or more display screens showing the odds or payout information for the game or games provided by the gaming unit 20. In addition to the "See Pays" button, the control panel 66 may include a "Cash Out" button 74 that may be activated when a player decides to terminate play on the gaming unit 20, in which case the gaming unit 20 may return value to the player, such as by returning a number of coins to the player via the payout tray 64.

If the gaming unit 20 provides a slots game having a plurality of reels and a plurality of paylines which define winning combinations of reel symbols, the control panel 66 may be provided with a plurality of selection buttons 76, each of which allows the player to select a different number of paylines prior to spinning the reels. For example, five buttons 76 may be provided, each of which may allow a player to select one, three, five, seven or nine paylines. In addition, the control panel 66 may be provided with a plurality of selection buttons 78 each of which allows a player to specify a wager amount for each payline selected. For example, if the smallest wager accepted by the gaming unit 20 is a quarter ($0.25), the gaming unit 20 may be provided with five selection buttons 78, each of which may allow a player to select one, two, three, four or five quarters to wager for each payline selected. In that case, if a player were to activate the "5" button 76 (meaning that five paylines were to be played on the next spin of the reels) and then activate the "3" button 78 (meaning that three coins per payline were to be wagered), the total wager would be $3.75 (assuming the minimum bet was $0.25).

The control panel 66 may include a "Max Bet" button 80 to allow a player to make the maximum wager allowable for a game. In the above example, where up to nine paylines were provided and up to five quarters could be wagered for each payline selected, the maximum wager would be 45 quarters, or $11.25. The control panel 66 may include a spin button 82 to allow the player to initiate spinning of the reels of a slots game after a wager has been made.

In Fig. 2A, a rectangle is shown around the buttons 72, 74, 76, 78, 80, 82. It should be understood that that rectangle simply designates, for ease of reference, an area in which the buttons 72, 74, 76, 78, 80, 82 may be located. Consequently, the term "control panel" should not be construed to imply that a panel or plate separate from the housing 50 of the gaming unit 20 is required, and the term "control panel" may encompass a plurality or grouping of player activatable buttons. In one embodiment, each of the areas designated by a rectangle in FIG. 2A is a cutout area of a control panel cover. The control panel cover may hide unused portions of a display when one or more of the buttons 72, 74, 76, 78, 80, 82 is a dynamic button.

Although one possible control panel 66 is described above, it should be understood that different buttons could be utilized in the control panel 66, and that the particular buttons used may depend on the game or games that could be played on the gaming unit 20. In one embodiment, an input indicator may be generated inside one or more dynamic buttons which reflects a current game selection and/or a current game mode. The current game selection may be preprogrammed by the manufacturer, preprogrammed by a technician, and/or selected through interaction with a player. Examples of game selections include video poker, video blackjack, video slots, video keno, video bingo, and any other casino game. The current game mode may be determined by a controller and/or player interactions. Examples of game modes include demo mode, player attraction mode, game selection mode, wager mode, game play mode, payout mode, and any other mode of a casino game. In addition, the image of any dynamic button may be fixed and/or animated.

Figs 2B-2G illustrate a control panel embodiment analogous to the control panel 66. Fig. 2B is a top plan view of a plurality of dynamic buttons. Fig. 2C is a cross-sectional view of the plurality of dynamic buttons taken along line C-C of Fig. 2B. Fig. 2C is an exploded cross-sectional view of the plurality of dynamic buttons. Each dynamic button may include a display area 83, a tactile feedback portion 85, and an input detection portion 87.

The display area 83 may be some or all of a liquid crystal display (LCD) or a cathode ray tube (CRT) operatively connected to a controller as described in detail below. The display area 83 may be an auxiliary display or a portion of the main display 70. For example, a pliable membrane switch array and a transparent touch-sensitive screen may be placed over a portion of the main display 70. In either case, the display may include a non-input portion, wherein the transparent touch screen surface does not cover the non-input portion.

The tactile feedback portion 85 may be a pliable silicon membrane, a plastic switch, a polyurethane lens, or any other input device which provides tactile feedback. The tactile feedback portion 85 may be transparent. In addition, the tactile feedback portion 85 may magnify underlying images. The input detection portion 87 may be resistive touch-sensitive screen, a capacitive touch-sensitive screen, a switch, or any other type of input device. If a touch-screen surface is used, the touch screen may be transparent. During operation, the display area 83 may be visible through the input detection portion 87 and the tactile feedback portion 85.

Fig. 2E is an enlarged fragmentary cross-sectional view of a tactile feedback portion 85 taken about the circumscribed portion E of Fig. 2D. In this embodiment, a molded hinge 89 provides the tactile feedback and returns the tactile feedback portion 85 to its original position after each depression. In addition, a touch screen contact 91 may be included in the tactile feedback portion 85. When the touch screen contact 91 touches the touch-sensitive screen 87, an input signal may be transmitted to the controller 100. In response, the image generated by the LCD at the location of the activated button (or any other display portion) may be changed.

Fig. 2F is an illustration of an embodiment of buttons that may be displayed during performance of a video slots routine. In this embodiment, a "cash out" button 95a, a "see pays" button 95b, a "bet one" button 95c, a "bet max" button 95d, and a "spin" button 95e are displayed. The operation of these buttons is described in detail below. Some of theses buttons 95a-95e may be static buttons, and some of theses buttons 95a-95e may be dynamic buttons. Fig. 2G is an illustration of an embodiment of buttons that may be displayed during performance of a video poker routine. In this embodiment, buttons 95a-95d remain unchanged from the embodiment illustrated in Fig. 2F. However, because the game has changed from video slots to video poker, the "spin" button 95e may dynamically changed from "spin" to "deal / draw." In this manner, buttons with tactile feedback may be made to dynamically match the current game selection.

### Gaming Unit Electronics

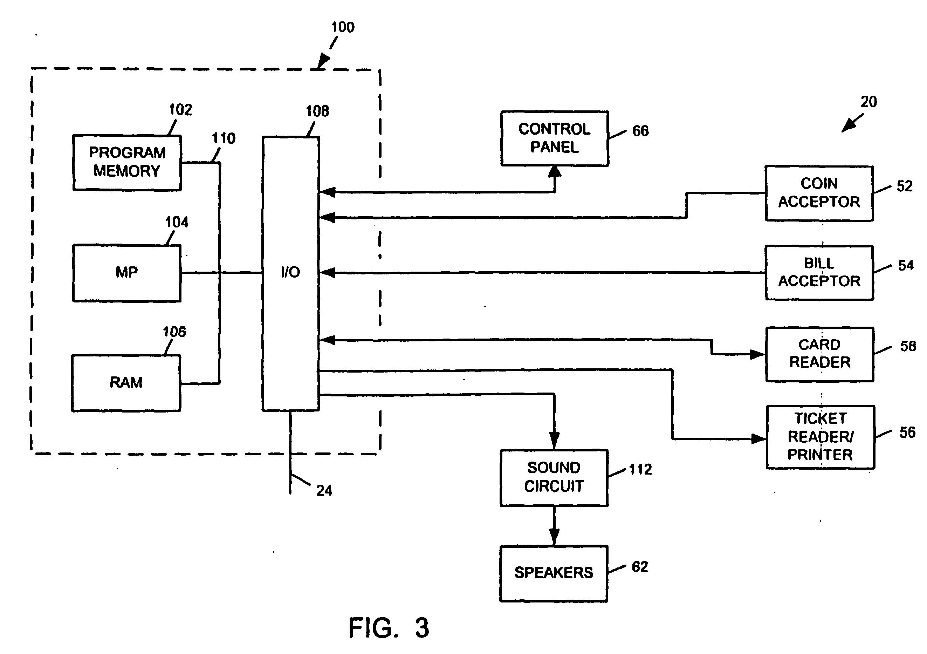

Fig. 3 is a block diagram of a number of components that may be incorporated in the gaming unit 20. Referring to Fig. 3, the gaming unit 20 may include a controller 100 that may comprise a program memory 102, a microcontroller or microprocessor (MP) 104, a random-access memory (RAM) 106 and an input/output (I/O) circuit 108, all of which may be interconnected via an address/data bus 110. It should be appreciated that although only one microprocessor 104 is shown, the controller 100 may include multiple microprocessors 104. Similarly, the memory of the controller 100 may include multiple RAMs 106 and multiple program memories 102. Although the I/O circuit 108 is shown as a single block, it should be appreciated that the I/O circuit 108 may include a number of different types of I/O circuits. The RAM(s) 106 and program memories 102 may be implemented as semiconductor memories, magnetically readable memories, and/or optically readable memories, for example.

Fig. 3 illustrates that the control panel 66, the coin acceptor 52, the bill acceptor 54, the card reader 58 and the ticket reader/printer 56 may be operatively coupled to the I/O circuit 108, each of those components being so coupled by either a unidirectional or bidirectional, single-line or multiple-line data link, which may depend on the design of the component that is used. The speaker(s) 62 may be operatively coupled to a sound circuit 112, that may comprise a voice- and sound-synthesis circuit or that may comprise a driver circuit. The sound-generating circuit 112 may be coupled to the I/O circuit 108.

As shown in Fig. 3, the components 52, 54, 56, 58, 66, 112 may be connected to the I/O circuit 108 via a respective direct line or conductor. Different connection schemes could be used. For example, one or more of the components shown in Fig. 3 may be connected to the I/O circuit 108 via a common bus or other data link that is shared by a number of components. Furthermore, some of the components may be directly connected to the microprocessor 104 without passing through the I/O circuit 108.

During operation of a dynamic tactile button, the controller 100 may send image data for display on the display area 83 of the button and receive input signals from the input detection portion 87 of the button when a user depresses the transparent tactile feedback portion 85 of the button. Consequently, the two different sets of button images shown in Figs. 2F and 2G may be generated at different times using the same physical structure.

### Overall Operation of Gaming Unit

One manner in which one or more of the gaming units 20 (and one or more of the gaming units 30) may operate is described below in connection with a number of flowcharts which represent a number of portions or routines of one or more computer programs, which may be stored in one or more of the memories of the controller 100. The computer program(s) or portions thereof may be stored remotely, outside of the gaming unit 20, and may control the operation of the gaming unit 20 from a remote location. Such remote control may be facilitated with the use of a wireless connection, or by an Internet interface that connects the gaming unit 20 with a remote computer (such as one of the network computers 22, 32) having a memory in which the computer program portions are stored. The computer program portions may be written in any high level language such as C, C +, C + + or the like or any low-level, assembly or machine language. By storing the computer program portions therein, various portions of the memories 102, 106 are physically and/or structurally configured in accordance with computer program instructions.

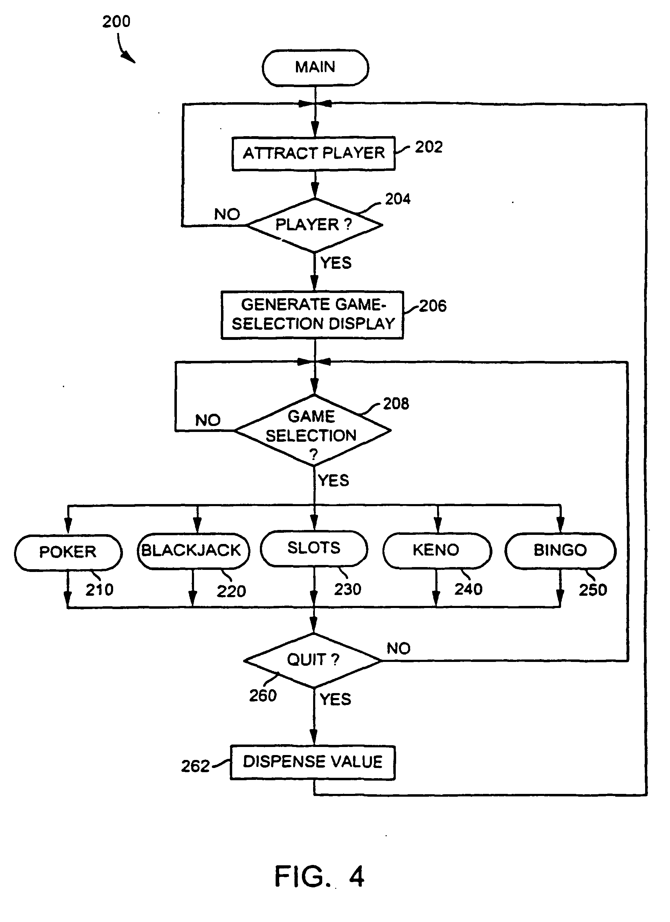

Fig. 4 is a flowchart of a main operating routine 200 that may be stored in the memory of the controller 100. Referring to Fig. 4, the main routine 200 may begin operation at block 202 during which an attraction sequence may be performed in an attempt to induce a potential player in a casino to play the gaming unit 20. The attraction sequence may be performed by displaying one or more video images on the main display unit 70, displaying one or more video images on the control panel 66, and/or causing one or more sound segments, such as voice or music, to be generated via the speakers 62. The attraction sequence may include a scrolling list of games that may be played on the gaming unit 20 and/or video images of various games being played, such as video poker, video blackjack, video slots, video keno, video bingo, etc. In one embodiment, a plurality of game selections are generated on a plurality of dynamic tactile buttons on the control panel 66.

During performance of the attraction sequence, if a potential player makes any input to the gaming unit 20 as determined at block 204, the attraction sequence may be terminated and a game-selection display may be generated on the main display unit 70 and/or a dynamic tactile button at block 206. The gaming unit 20 may detect an input at block 204 in various ways. For example, the gaming unit 20 could detect if the player presses any button on the gaming unit 20; the gaming unit 20 could determine if the player deposited one or more coins into the gaming unit 20; the gaming unit 20 could determine if player deposited paper currency into the gaming unit; etc.

The game-selection display generated at block 206 may include, for example, a list of video games that may be played on the gaming unit 20 and/or a visual message to prompt the player to deposit value into the gaming unit 20. While the game-selection display is generated, the gaming unit 20 may wait for the player to make a game selection. Upon selection of one of the games by the player as determined at block 208, the controller 100 may cause one of a number of game routines to be performed to allow the selected game to be played. For example, the game routines could include a video poker routine 210, a video blackjack routine 220, a slots routine 230, a video keno routine 240, and a video bingo routine 250. At block 208, if no game selection is made within a given period of time, the operation may branch back to block 202.

After one of the routines 210, 220, 230, 240, 250 has been performed to allow the player to play one of the games, block 260 may be utilized to determine whether the player wishes to terminate play on the gaming unit 20 or to select another game. If the player wishes to stop playing the gaming unit 20, which wish may be expressed, for example, by selecting a "Cash Out" button, the controller 100 may dispense value to the player at block 262 based on the outcome of the game(s) played by the player. The operation may then return to block 202. If the player did not wish to quit as determined at block 260, the routine may return to block 208 where the game-selection display may again be generated to allow the player to select another game.

It should be noted that although five gaming routines are shown in Fig. 4, a different number of routines could be included to allow play of a different number of games. The gaming unit 20 may also be programmed to allow play of different games.

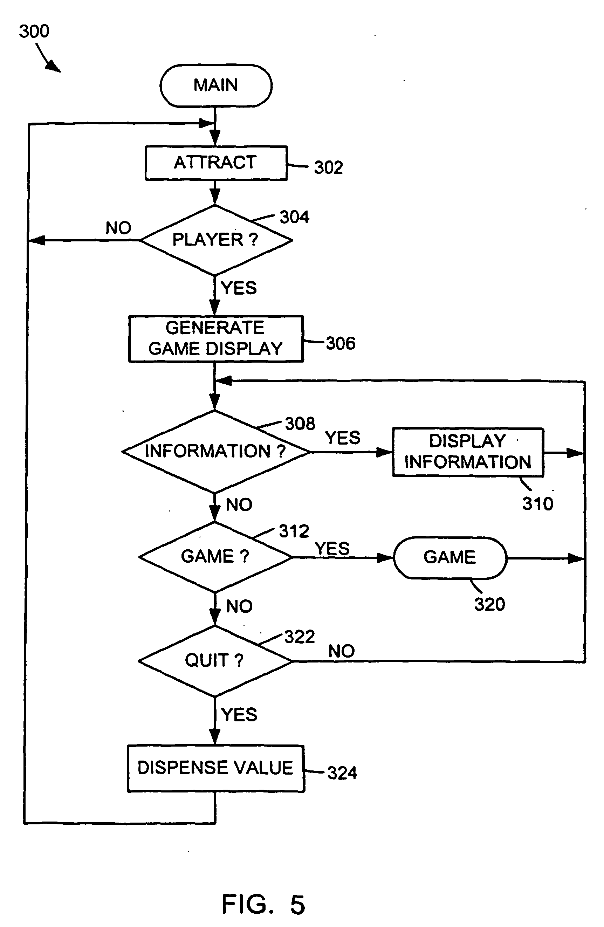

Fig. 5 is a flowchart of an alternative main operating routine 300 that may be stored in the memory of the controller 100. The main routine 300 may be utilized for gaming units 20 that are designed to allow play of only a single game or single type of game. Referring to Fig. 5, the main routine 300 may begin operation at block 302 during which an attraction sequence may be performed in an attempt to induce a potential player in a casino to play the gaming unit 20. The attraction sequence may be performed by displaying one or more video images on the main display unit 70, displaying one or more video images on the control panel 66, and /or causing one or more sound segments, such as voice or music, to be generated via the speakers 62.

During performance of the attraction sequence, if a potential player makes any input to the gaming unit 20 as determined at block 304, the attraction sequence may be terminated and a game display may be generated on the main display unit 70 at block 306. The game display generated at block 306 may include, for example, an image of the casino game that may be played on the gaming unit 20 and/or a visual message to prompt the player to deposit value into the gaming unit 20. At block 308, the gaming unit 20 may determine if the player requested information concerning the game, in which case the requested information may be displayed at block 310. Block 312 may be used to determine if the player requested initiation of a game, in which case a game routine 320 may be performed. The game routine 320 could be any one of the game routines disclosed herein, such as one of the five game routines 210, 220, 230, 240, 250, or another game routine.

After the routine 320 has been performed to allow the player to play the game, block 322 may be utilized to determine whether the player wishes to terminate play on the gaming unit 20. If the player wishes to stop playing the gaming unit 20, which wish may be expressed, for example, by selecting a "Cash Out" button, the controller 100 may dispense value to the player at block 324 based on the outcome of the game(s) played by the player. The operation may then return to block 302. If the player did not wish to quit as determined at block 322, the operation may return to block 308.

### Video Poker

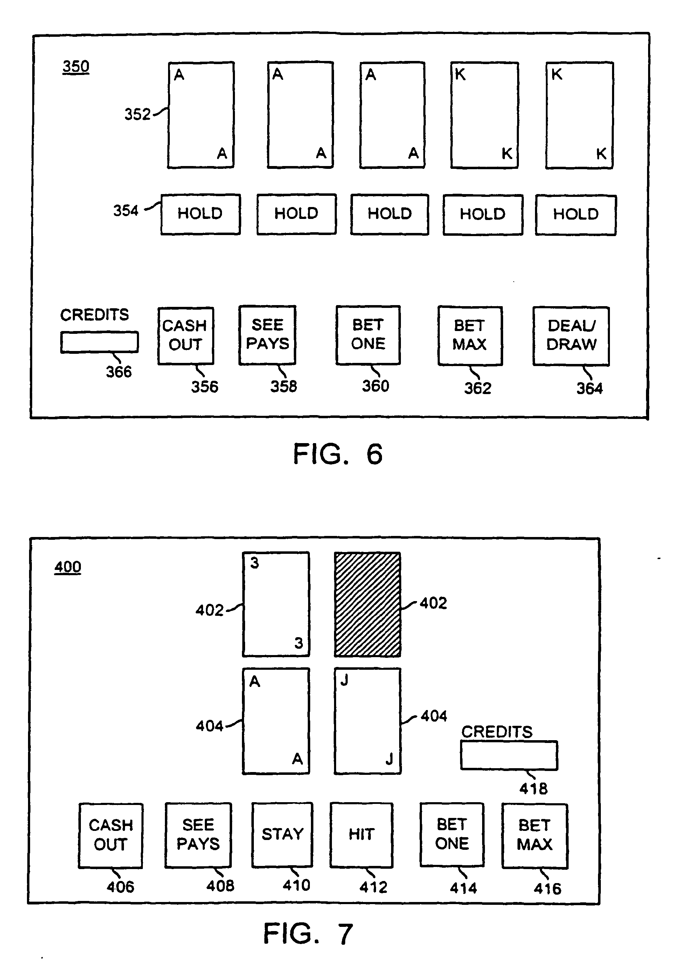

Fig. 6 is an exemplary display 350 that may be shown on the main display unit 70 during performance of the video poker routine 210 shown schematically in Fig. 4. Referring to Fig. 6, the display 350 may include video images 352 of a plurality of playing cards representing the player's hand, such as five cards. To allow the player to control the play of the video poker game, a plurality of player-selectable buttons may be displayed. The buttons may include a "Hold" button 354 disposed directly below each of the playing card images 352, a "Cash Out" button 356, a "See Pays" button 358, a "Bet One Credit" button 360, a "Bet Max Credits" button 362, and a "Deal/Draw" button 364. The display 350 may also include an area 366 in which the number of remaining credits or value is displayed. If the main display unit 70 is provided with a touch-sensitive screen, the buttons 354, 356, 358, 360, 362, 364 may form part of the video display 350. Alternatively, one or more of those buttons may be provided as part of a control panel that is provided separately from the main display unit 70.

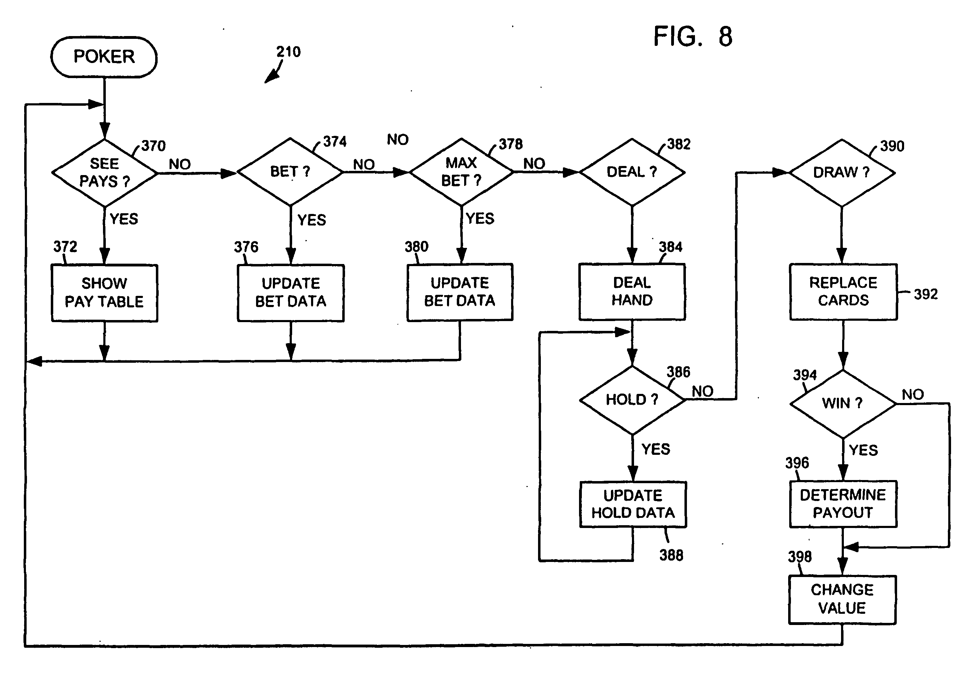

Fig. 8 is a flowchart of the video poker routine 210 shown schematically in Fig. 4. Referring to Fig. 8, at block 370, the routine may determine whether the player has requested payout information, such as by activating the "See Pays" button 358, in which case at block 372 the routine may cause one or more pay tables to be displayed on the main display unit 70. At block 374, the routine may determine whether the player has made a bet, such as by pressing the "Bet One Credit" button 360, in which case at block 376 bet data corresponding to the bet made by the player may be stored in the memory of the controller 100. At block 378, the routine may determine whether the player has pressed the "Bet Max Credits" button 362, in which case at block 380 bet data corresponding to the maximum allowable bet may be stored in the memory of the controller 100.

At block 382, the routine may determine if the player desires a new hand to be dealt, which may be determined by detecting if the "Deal/Draw" button 364 was activated after a wager was made. In that case, at block 384 a video poker hand may be "dealt" by causing the main display unit 70 to generate the playing card images 352. After the hand is dealt, at block 386 the routine may determine if any of the "Hold" buttons 354 have been activated by the player, in which case data regarding which of the playing card images 352 are to be "held" may be stored in the controller 100 at block 388. If the "Deal/Draw" button 364 is activated again as determined at block 390, each of the playing card images 352 that was not "held" may be caused to disappear from the video display 350 and to be replaced by a new, randomly selected, playing card image 352 at block 392.

At block 394, the routine may determine whether the poker hand represented by the playing card images 352 currently displayed is a winner. That determination may be made by comparing data representing the currently displayed poker hand with data representing all possible winning hands, which may be stored in the memory of the controller 100. If there is a winning hand, a payout value corresponding to the winning hand may be determined at block 396. At block 398, the player's cumulative value or number of credits may be updated by subtracting the bet made by the player and adding, if the hand was a winner, the payout value determined at block 396. The cumulative value or number of credits may also be displayed in the display area 366 (Fig. 6).

Although the video poker routine 210 is described above in connection with a single poker hand of five cards, the routine 210 may be modified to allow other versions of poker to be played. For example, seven card poker may be played, or stud poker may be played. Alternatively, multiple poker hands may be simultaneously played. In that case, the game may begin by dealing a single poker hand, and the player may be allowed to hold certain cards. After deciding which cards to hold, the held cards may be duplicated in a plurality of different poker hands, with the remaining cards for each of those poker hands being randomly determined.

### Video Blackjack

Fig. 7 is an exemplary display 400 that may be shown on the main display unit 70 during performance of the video blackjack routine 220 shown schematically in Fig. 4. Referring to Fig. 7, the display 400 may include video images 402 of a pair of playing cards representing a dealer's hand, with one of the cards shown face up and the other card being shown face down, and video images 404 of a pair of playing cards representing a player's hand, with both the cards shown face up. The "dealer" may be the gaming unit 20.

To allow the player to control the play of the video blackjack game, a plurality of player-selectable buttons may be displayed. The buttons may include a "Cash Out" button 406, a "See Pays" button 408, a "Stay" button 410, a "Hit" button 412, a "Bet One Credit" button 414, and a "Bet Max Credits" button 416. The display 400 may also include an area 418 in which the number of remaining credits or value is displayed. If the main display unit 70 is provided with a touch-sensitive screen, the buttons 406, 408, 410, 412, 414, 416 may form part of the video display 400. Alternatively, one or more of those buttons may be provided as part of a control panel that is provided separately from the main display unit 70.

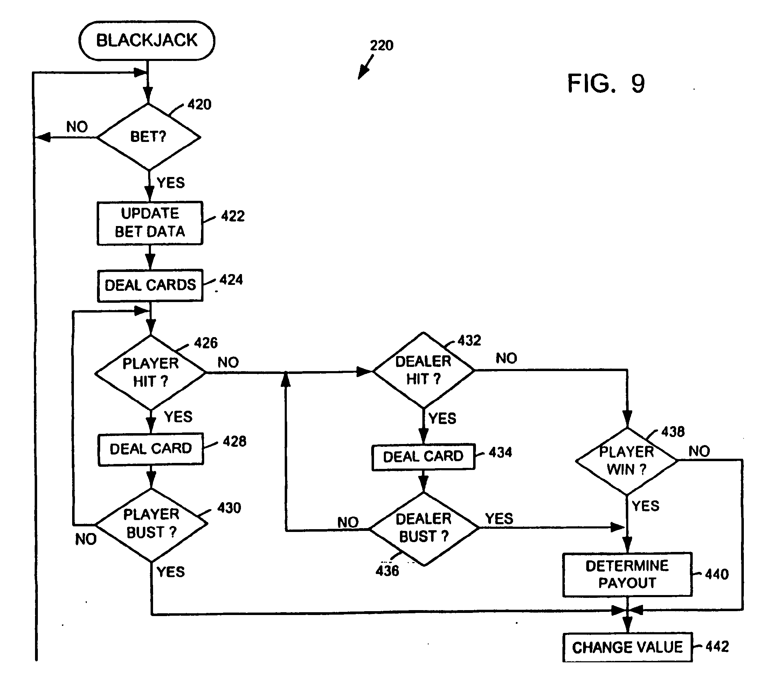

Fig. 9 is a flowchart of the video blackjack routine 220 shown schematically in Fig. 4. Referring to Fig. 9, the video blackjack routine 220 may begin at block 420 where it may determine whether a bet has been made by the player. That may be determined, for example, by detecting the activation of either the "Bet One Credit" button 414 or the "Bet Max Credits" button 416. At block 422, bet data corresponding to the bet made at block 420 may be stored in the memory of the controller 100. At block 424, a dealer's hand and a player's hand may be "dealt" by making the playing card images 402, 404 appear on the main display unit 70.

At block 426, the player may be allowed to be "hit," in which case at block 428 another card will be dealt to the player's hand by making another playing card image 404 appear in the display 400. If the player is hit, block 430 may determine if the player has "bust," or exceeded 21. If the player has not bust, blocks 426 and 428 may be performed again to allow the player to be hit again.

If the player decides not to hit, at block 432 the routine may determine whether the dealer should be hit. Whether the dealer hits may be determined in accordance with predetermined rules, such as the dealer always hit if the dealer's hand totals 15 or less. If the dealer hits, at block 434 the dealer's hand may be dealt another card by making another playing card image 402 appear in the display 400. At block 436 the routine may determine whether the dealer has bust. If the dealer has not bust, blocks 432, 434 may be performed again to allow the dealer to be hit again.

If the dealer does not hit, at block 436 the outcome of the blackjack game and a corresponding payout may be determined based on, for example, whether the player or the dealer has the higher hand that does not exceed 21. If the player has a winning hand, a payout value corresponding to the winning hand may be determined at block 440. At block 442, the player's cumulative value or number of credits may be updated by subtracting the bet made by the player and adding, if the player won, the payout value determined at block 396. The cumulative value or number of credits may also be displayed in the display area 418 (Fig. 7).

### Slots

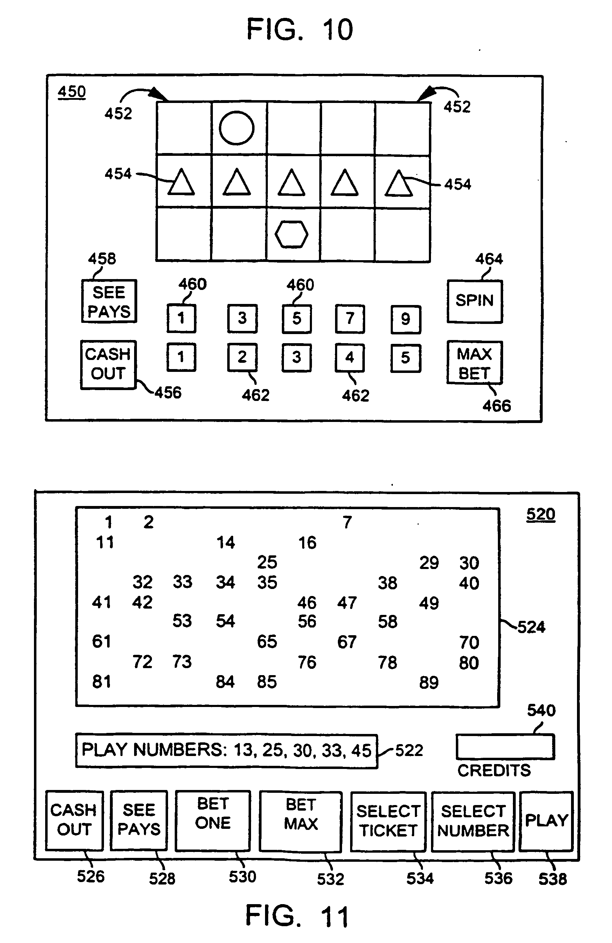

Fig. 10 is an exemplary display 450 that may be shown on the main display unit 70 during performance of the slots routine 230 shown schematically in Fig. 4. Referring to Fig. 10, the display 450 may include video images 452 of a plurality of slot machine reels, each of the reels having a plurality of reel symbols 454 associated therewith. To allow the player to control the play of the slots game, a plurality of player-selectable buttons may be displayed. The buttons may include a "Cash Out" button 456, a "See Pays" button 458, a plurality of payline-selection buttons 460 each of which allows the player to select a different number of paylines prior to "spinning" the reels, a plurality of bet-selection buttons 462 each of which allows a player to specify a wager amount for each payline selected, a "Spin" button 464, and a "Max Bet" button 466 to allow a player to make the maximum wager allowable.

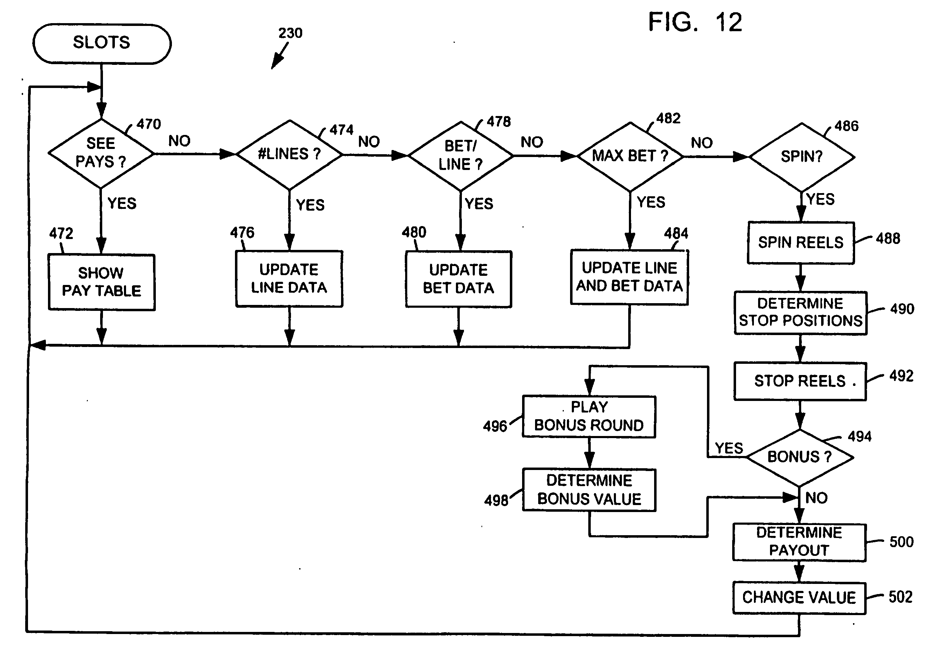

Fig. 12 is a flowchart of the slots routine 230 shown schematically in Fig. 10. Referring to Fig. 12, at block 470, the routine may determine whether the player has requested payout information, such as by activating the "See Pays" button 458, in which case at block 472 the routine may cause one or more pay tables to be displayed on the main display unit 70. At block 474, the routine may determine whether the player has pressed one of the payline-selection buttons 460, in which case at block 476 data corresponding to the number of paylines selected by the player may be stored in the memory of the controller 100. At block 478, the routine may determine whether the player has pressed one of the bet-selection buttons 462, in which case at block 480 data corresponding to the amount bet per payline may be stored in the memory of the controller 100. At block 482, the routine may determine whether the player has pressed the "Max Bet" button 466, in which case at block 484 bet data (which may include both payline data and bet-per-payline data) corresponding to the maximum allowable bet may be stored in the memory of the controller 100.

If the "Spin" button 464 has been activated by the player as determined at block 486, at block 488 the routine may cause the slot machine reel images 452 to begin "spinning" so as to simulate the appearance of a plurality of spinning mechanical slot machine reels. At block 490, the routine may determine the positions at which the slot machine reel images will stop, or the particular symbol images 454 that will be displayed when the reel images 452 stop spinning. At block 492, the routine may stop the reel images 452 from spinning by displaying stationary reel images 452 and images of three symbols 454 for each stopped reel image 452. The virtual reels may be stopped from left to right, from the perspective of the player, or in any other manner or sequence.

The routine may provide for the possibility of a bonus game or round if certain conditions are met, such as the display in the stopped reel images 452 of a particular symbol 454. If there is such a bonus condition as determined at block 494, the routine may proceed to block 496 where a bonus round may be played. The bonus round may be a different game than slots, and many other types of bonus games could be provided. If the player wins the bonus round, or receives additional credits or points in the bonus round, a bonus value may be determined at block 498. A payout value corresponding to outcome of the slots game and/or the bonus round may be determined at block 500. The payout value may depend on three-dimensional game options as described in detail below. At block 502, the player's cumulative value or number of credits may be updated by subtracting the bet made by the player and adding, if the slot game and/or bonus round was a winner, the payout value determined at block 500.

### Video Keno

Fig. 11 is an exemplary display 520 that may be shown on the main display unit 70 during performance of the video keno routine 240 shown schematically in Fig. 4. Referring to Fig. 11, the display 520 may include a video image 522 of a plurality of numbers that were selected by the player prior to the start of a keno game and a video image 524 of a plurality of numbers randomly selected during the keno game. The randomly selected numbers may be displayed in a grid pattern.

To allow the player to control the play of the keno game, a plurality of player-selectable buttons may be displayed. The buttons may include a "Cash Out" button 526, a "See Pays" button 528, a "Bet One Credit" button 530, a "Bet Max Credits" button 532, a "Select Ticket" button 534, a "Select Number" button 536, and a "Play" button 538. The display 520 may also include an area 540 in which the number of remaining credits or value is displayed. If the main display unit 70 is provided with a touch-sensitive screen, the buttons may form part of the video display 520. Alternatively, one or more of those buttons may be provided as part of a control panel that is provided separately from the main display unit 70.

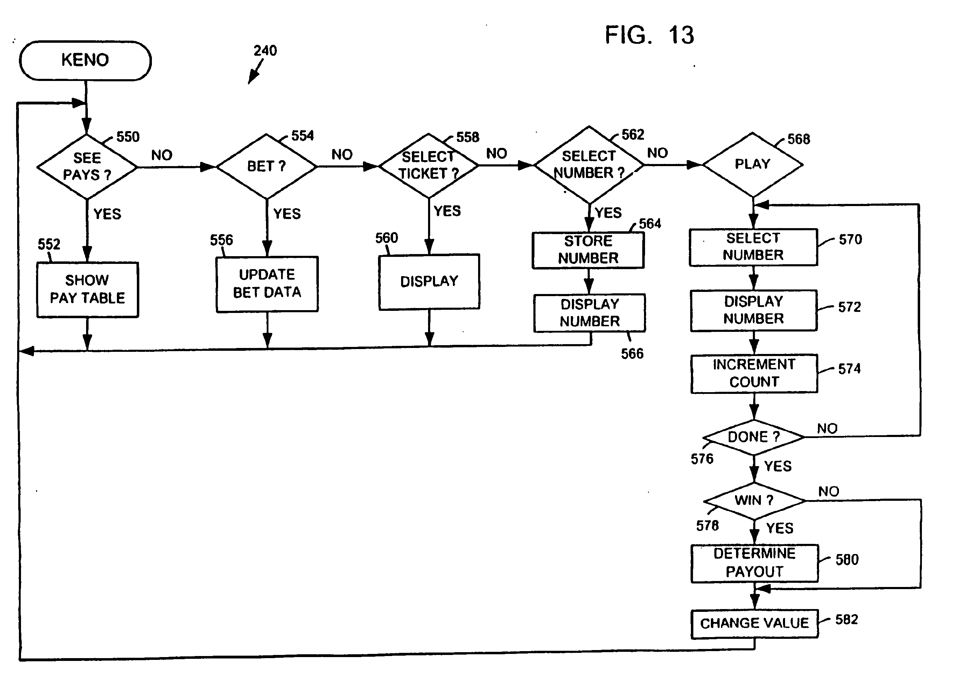

Fig. 13 is a flowchart of the video keno routine 240 shown schematically in Fig. 4. The keno routine 240 may be utilized in connection with a single gaming unit 20 where a single player is playing a keno game, or the keno routine 240 may be utilized in connection with multiple gaming units 20 where multiple players are playing a single keno game. In the latter case, one or more of the acts described below may be performed either by the controller 100 in each gaming unit or by one of the network computer 22, 32 to which multiple gaming units 20 are operatively connected.

Referring to Fig. 13, at block 550, the routine may determine whether the player has requested payout information, such as by activating the "See Pays" button 528, in which case at block 552 the routine may cause one or more pay tables to be displayed on the main display unit 70. At block 554, the routine may determine whether the player has made a bet, such as by having pressed the "Bet One Credit" button 530 or the "Bet Max Credits" button 532, in which case at block 556 bet data corresponding to the bet made by the player may be stored in the memory of the controller 100. After the player has made a wager, at block 558 the player may select a keno ticket, and at block 560 the ticket may be displayed on the display 520. At block 562, the player may select one or more game numbers, which may be within a range set by the casino. After being selected, the player's game numbers may be stored in the memory of the controller 100 at block 564 and may be included in the image 522 on the display 520 at block 566. After a certain amount of time, the keno game may be closed to additional players (where a number of players are playing a single keno game using multiple gambling units 20).

If play of the keno game is to begin as determined at block 568, at block 570 a game number within a range set by the casino may be randomly selected either by the controller 100 or a central computer operatively connected to the controller, such as one of the network computers 22, 32. At block 572, the randomly selected game number may be displayed on the main display unit 70 and the display units 70 of other gaming units 20 (if any) which are involved in the same keno game. At block 574, the controller 100 (or the central computer noted above) may increment a count which keeps track of how many game numbers have been selected at block 570.

At block 576, the controller 100 (or one of the network computers 22, 32) may determine whether a maximum number of game numbers within the range have been randomly selected. If not, another game number may be randomly selected at block 570. If the maximum number of game numbers has been selected, at block 578 the controller 100 (or a central computer) may determine whether there are a sufficient number of matches between the game numbers selected by the player and the game numbers selected at block 570 to cause the player to win. The number of matches may depend on how many numbers the player selected and the particular keno rules being used.

If there are a sufficient number of matches, a payout may be determined at block 580 to compensate the player for winning the game. The payout may depend on the number of matches between the game numbers selected by the player and the game numbers randomly selected at block 570. At block 582, the player's cumulative value or number of credits may be updated by subtracting the bet made by the player and adding, if the keno game was won, the payout value determined at block 580. The cumulative value or number of credits may also be displayed in the display area 540 (Fig. 11).

### Video Bingo

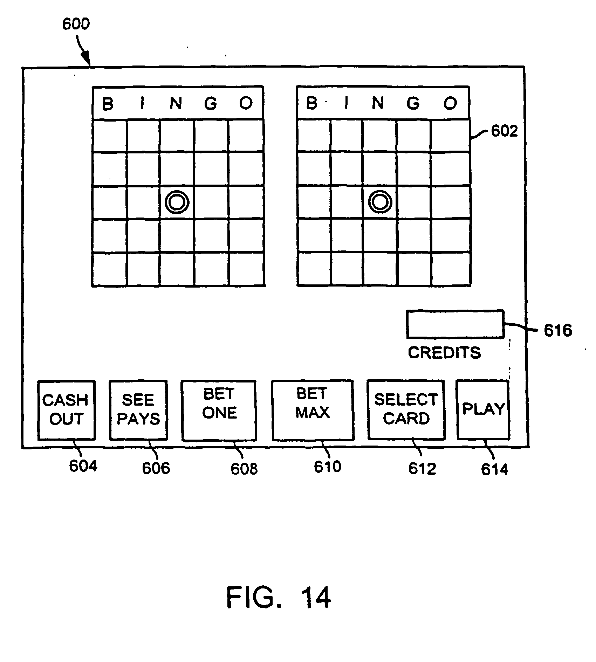

Fig. 14 is an exemplary display 600 that may be shown on the main display unit 70 during performance of the video bingo routine 250 shown schematically in Fig. 4. Referring to Fig. 14, the display 600 may include one or more video images 602 of a bingo card and images of the bingo numbers selected during the game. The bingo card images 602 may have a grid pattern.

To allow the player to control the play of the bingo game, a plurality of player-selectable buttons may be displayed. The buttons may include a "Cash Out" button 604, a "See Pays" button 606, a "Bet One Credit" button 608, a "Bet Max Credits" button 610, a "Select Card" button 612, and a "Play" button 614. The display 600 may also include an area 616 in which the number of remaining credits or value is displayed. If the main display unit 70 is provided with a touch-sensitive screen, the buttons may form part of the video display 600. Alternatively, one or more of those buttons may be provided as part of a control panel that is provided separately from the main display unit 70.

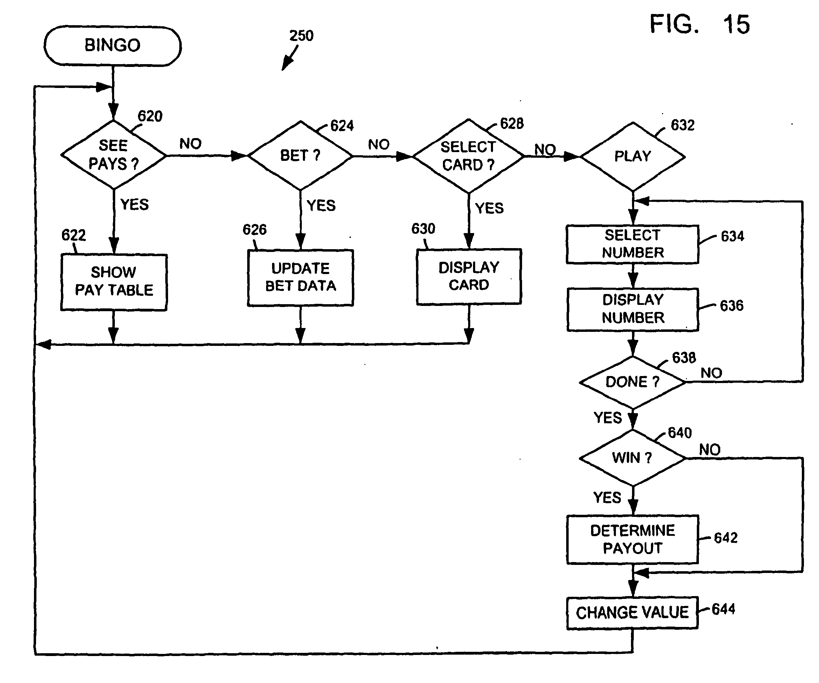

Fig. 15 is a flowchart of the video bingo routine 250 shown schematically in Fig. 4. The bingo routine 250 may be utilized in connection with a single gaming unit 20 where a single player is playing a bingo game, or the bingo routine 250 may be utilized in connection with multiple gaming units 20 where multiple players are playing a single bingo game. In the latter case, one or more of the acts described below may be performed either by the controller 100 in each gaming unit 20 or by one of the network computers 22, 32 to which multiple gaming units 20 are operatively connected.

Referring to Fig. 15, at block 620, the routine may determine whether the player has requested payout information, such as by activating the "See Pays" button 606, in which case at block 622 the routine may cause one or more pay tables to be displayed on the main display unit 70. At block 624, the routine may determine whether the player has made a bet, such as by having pressed the "Bet One Credit" button 608 or the "Bet Max Credits" button 610, in which case at block 626 bet data corresponding to the bet made by the player may be stored in the memory of the controller 100.

After the player has made a wager, at block 628 the player may select a bingo card, which may be generated randomly. The player may select more than one bingo card, and there may be a maximum number of bingo cards that a player may select. After play is to commence as determined at block 632, at block 634 a bingo number may be randomly generated by the controller 100 or a central computer such as one of the network computers 22, 32. At block 636, the bingo number may be displayed on the main display unit 70 and the display units 70 of any other gaming units 20 involved in the bingo game.

At block 638, the controller 100 (or a central computer) may determine whether any player has won the bingo game. If no player has won, another bingo number may be randomly selected at block 634. If any player has bingo as determined at block 638, the routine may determine at block 640 whether the player playing that gaming unit 20 was the winner. If so, at block 642 a payout for the player may be determined. The payout may depend on the number of random numbers that were drawn before there was a winner, the total number of winners (if there was more than one player), and the amount of money that was wagered on the game. At block 644, the player's cumulative value or number of credits may be updated by subtracting the bet made by the player and adding, if the bingo game was won, the payout value determined at block 642. The cumulative value or number of credits may also be displayed in the display area 616 (Fig. 14).

## Claims

1. A gaming apparatus (20) comprising:
a display unit (70, 83) that is capable of generating video images;
a value input device (52, 54, 56, 58);
a transparent touch screen surface (87) covering at least a portion of the display unit (70, 83);
a transparent switch member (66) covering at least a portion of the touch screen surface (87), the transparent switch member (66) being structured to avoid contact with the transparent touch screen surface (87) when the transparent switch member (66) is in a first position, the transparent switch member (66) being structured to contact the transparent touch screen surface (87) when the transparent switch member (66) is in a second position;
the transparent switch member (66) having a tactile feedback portion (85) that provides tactile feedback, wherein the tactile feedback portion (85) returns to its original position after each depression, the tactile feedback portion (85) having a touch screen contact (91) for touching the transparent touch screen surface (87) in the second position and the apparatus (20) arranged so that when said contact (91) touches said surface (87) an input signal is transmitted to a controller (100),
said controller (100) operatively coupled to the display unit (70, 83), the value input device (52, 54, 56, 58), and the transparent touch screen surface (87), the controller (100) comprising a processor (104) and a memory (103, 106) operatively coupled to the processor (104),
the controller (100) being programmed to cause an input indicator to be generated at the portion of the display unit (70, 83) covered by the transparent touch screen surface (87), the input indicator being visible through the transparent switch member (66), the input indicator representing a portion of one of the following games: video poker, video blackjack, video slots, video keno or video bingo,
the controller (100) being programmed to receive an input signal generated in response to movement of the transparent switch member (66) from the first position to the second position.

2. A gaming apparatus (20) as defined in claim 1, further comprising:
slot machine reels; and
wherein the controller (100) is operatively coupled to the slot machine reels, display unit (70, 83), the value input device (52, 54, 56, 58), and the transparent touch screen surface (87).

3. A gaming apparatus (20) as defined in claim 1 or 2, wherein the transparent switch member (66) comprises a polyurethane lens.

4. A gaming apparatus (20) as defined in claim 3, wherein the polyurethane lens is structured to magnify the input indicator.

5. A gaming apparatus (20) as defined in claim 1 or 2, wherein the transparent switch member (66) comprises a pliable silicon membrane.

6. A gaming apparatus (20) as defined in claim 5, wherein the polyurethane lens is structured to magnify the input indicator.

7. A gaming apparatus (20) as defined in claim 1 or 2, wherein the display unit (70, 83) comprises a liquid crystal display.

8. A gaming apparatus (20) as defined in claim 1 or 2, wherein the display unit (70, 83) comprises a cathode ray tube.

9. A gaming apparatus (20) as defined in claim 1 or 2, wherein the controller (100) is further programmed to cause the input indicator to depict a first image during play of a first casino game and a second image during play of a second casino game, the first image being different than the second image, the first casino game being different than the second casino game.

10. A gaming apparatus (20) as defined in claim 1 or 2, wherein the controller (100) is further programmed to cause the input indicator to depict a first image during a first mode of a casino game and a second image during a second mode of the casino game, the first image being different than the second image, the first mode being different than the second mode.

11. A gaming apparatus (20) as defined in claim 1 or 2, wherein the controller (100) is further programmed to cause the input indicator to change periodically.

12. A gaming apparatus (20) as defined in claim 1 or 2, wherein the transparent touch screen surface (87) comprises a resistive touch screen surface (87).

13. A gaming apparatus (20) as defined in claim 1 or 2, wherein the transparent touch screen surface (87) comprises a capacitive touch screen surface (87).

14. A gaming apparatus (20) as defined in claim 1 or 2, wherein the display unit (70, 83) includes a non-input portion, wherein the transparent touch screen surface (87) does not cover the non-input portion.

15. A gaming system (10) comprising a plurality of gaming apparatuses (20) as defined in claim 1 or 2, the gaming apparatuses (20) being interconnected to form a network (12) of gaming apparatuses (20).

16. A gaming system (10) as defined in claim 15, wherein the gaming apparatuses (20) are interconnected via the Internet.

17. A gaming apparatus (20) as defined in claim 1 or 2, wherein the controller (100) is further programmed to operate a game selected from the group of games consisting of video poker, video blackjack, video slots, video keno and video bingo

18. A gaming apparatus (20) as defined in claim 1 or 2, further comprising:
another display unit (70, 83) capable of generating video images,
wherein the controller (100) is operatively coupled to the other display unit (70, 83), the controller (100) being programmed to cause the other display unit (70, 83) to display a first image associated with the game
the controller (100) being programmed to cause the display unit (70, 83) to display a second image associated with the game, the second image being visible through the transparent switch member (66).

19. A gaming apparatus (20) as defined in claim 18, wherein the transparent switch member (66) comprises a polyurethane lens structured to magnify the second image.

20. A gaming apparatus (20) as defined in claim 18, wherein the controller (100) is further programmed to select the second image from a plurality of images based on a setup input indicative of the casino game.

21. A gaming apparatus (20) as defined in claim 18, wherein the controller (100) is further programmed to periodically change the second image.

## Patentansprüche

1. Spielvorrichtung (20) mit:
einer Anzeigeeinheit (70, 83), die fähig ist, Videobilder zu erzeugen;
einer Werteingabevorrichtung (52, 54, 56, 58);
einer transparenten Berührungsbildschirmoberfläche (87), die mindestens einen Abschnitt der Anzeigeeinheit (70, 83) bedeckt;
einem transparenten Schalterglied (66), das mindestens einen Abschnitt der Berührungsbildschirmoberfläche (87) bedeckt, wobei das transparente Schalterglied (66) aufgebaut ist, um einen Kontakt mit der transparenten Berührungsbildschirmoberfläche (87) zu vermeiden, wenn das transparente Schalterglied (66) in einer ersten Position ist, wobei das transparente Schalterglied (66) aufgebaut ist, um die transparente Berührungsbildschirmoberfläche (87) zu kontaktieren, wenn das transparente Schalterglied (66) in einer zweiten Position ist;
wobei das transparente Schalterglied (66) einen Tastrückkopplungsabschnitt (85) hat, der eine Tastrückkopplung liefert, wobei der Tastrückkopplungsabschnitt (85) nach jedem Drücken zu seiner ursprünglichen Position zurückkehrt, wobei der Tastrückkopplungsabschnitt (85) einen Berührungsbildschirmkontakt (91) zum Berühren der transparenten Berührungsbildschirmoberfläche (87) in der zweiten Position hat und die Vorrichtung (20) so angeordnet ist, dass, wenn der Kontakt (91) die Oberfläche (87) berührt, ein Eingangssignal zu einer Steuerung (100) übertragen wird,
wobei die Steuerung (100) mit der Anzeigeeinheit (70, 83), der Werteingabevorrichtung (52, 54, 56, 58) und der transparenten Beriihnangsbildschirmoberfläche (87) wirksam gekoppelt ist, wobei die Steuerung (100) einen Prozessor (104) und einen Speicher (103, 106), der mit dem Prozessor (104) wirksam gekoppelt ist, aufweist,
wobei die Steuerung (100) programmiert ist, um zu bewirken, dass bei dem Abschnitt der Anzeigeeinheit (70, 83), der durch die transparente Berührungsbildschirmoberfläche (87) bedeckt ist, ein Eingabezeiger erzeugt wird,
wobei der Eingabezeiger durch das transparente Schalterglied (66) sichtbar ist, wobei der Eingabezeiger einen Abschnitt eines der folgenden Spiele darstellt: Video-Poker, Video-Blackjack, Video-Slots, Video-Keno oder Video-Bingo,
wobei die Steuerung (100) programmiert ist, um ein Eingangssignal zu empfangen, das ansprechend auf eine Bewegung des transparenten Schalterglieds (66) von der ersten Position zu der zweiten Position erzeugt wird.

2. Spielvorrichtung (20) nach Anspruch 1, ferner mit:
Einwurfmaschinentrommeln; und
wobei die Steuerung (100) mit den Einwurfmaschinentrommeln, der Anzeigeeinheit (70, 83), der Werteingabevorrichtung (52, 54, 56, 58) und der transparenten Berührungsbildschirmoberfläche (87) wirksam gekoppelt ist.

3. Spielvorrichtung (20) nach Anspruch 1 oder 2, bei der das transparente Schalterglied (66) eine Polyurethan-Linse aufweist.

4. Spielvorrichtung (20) nach Anspruch 3, bei der die Polyurethan-Linse aufgebaut ist, um den Eingabezeiger zu vergrößern.

5. Spielvorrichtung (20) nach Anspruch 1 oder 2, bei der das transparente Schalterglied (66) eine biegsame Siliziummembran aufweist.

6. Spielvorrichtung (20) nach Anspruch 5, bei der die Polyurethan-Linse aufgebaut ist, um den Eingabezeiger zu vergrößern.

7. Spielvorrichtung (20) nach Anspruch 1 oder 2, bei der die Anzeigeeinheit (70, 83) eine Flüssigkristallanzeige aufweist.

8. Spielvorrichtung (20) nach Anspruch 1 oder 2, bei der die Anzeigeeinheit (70, 83) eine Kathodenstrahlröhre aufweist.

9. Spielvorrichtung (20) nach Anspruch 1 oder 2, bei der die Steuerung (100) ferner programmiert ist, um zu bewirken, dass der Eingabezeiger während des Spielens eines ersten Kasinospiels ein erstes Bild und während des Spielens eines zweiten Kasinospiels ein zweites Bild abbildet, wobei sich das erste Bild von dem zweiten Bild unterscheidet, wobei sich das erste Kasinospiel von dem zweiten Kasinospiel unterscheidet.

10. Spielvorrichtung (20) nach Anspruch 1 oder 2, bei der die Steuerung (100) ferner programmiert ist, um zu bewirken, dass der Eingabezeiger während eines ersten Modus eines Kasinospiels ein erstes Bild und während eines zweiten Modus des Kasinospiels ein zweites Bild abbildet, wobei sich das erste Bild von dem zweiten Bild unterscheidet, wobei sich der erste Modus von dem zweiten Modus unterscheidet.

11. Spielvorrichtung (20) nach Anspruch 1 oder 2, bei der die Steuerung (100) ferner programmiert ist, um zu bewirken, dass sich der Eingabezeiger periodisch ändert.

12. Spielvorrichtung (20) nach Anspruch 1 oder 2, bei der die transparente Berührungsbildschirmoberfläche (87) eine widerstandsbehaftete Berührungsbildschirmoberfläche (87) aufweist.

13. Spielvorrichtung (20) nach Anspruch 1 oder 2, bei der die transparente Berührungsbildschirmoberfläche (87) eine kapazitive Berührungsbildschirmoberfläche (87) aufweist.

14. Spielvorrichtung (20) nach Anspruch 1 oder 2, bei der die Anzeigeeinheit (70, 83) einen Nicht-Eingabeabschnitt umfasst, wobei die transparente Berührungsbildschirmoberfläche (87) den Nicht-Eingabeabschnitt nicht bedeckt.

15. Spielsystem (10), das eine Mehrzahl von Spielvorrichtungen (20) nach Anspruch 1 oder 2 aufweist, wobei die Spielvorrichtungen (20) miteinander verbunden sind, um ein Netz (12) von Spielvorrichtungen (20) zu bilden.

16. Spielsystem (10) nach Anspruch 15, bei dem die Spielvorrichtungen (20) über das Internet miteinander verbunden sind.

17. Spielvorrichtung (20) nach Anspruch 1 oder 2, bei der die Steuerung (100) ferner programmiert ist, um ein Spiel, das aus der Gruppe von Spielen, die aus Video-Poker, Video-Blackjack, Video-Slots, Video-Keno und Video-Bingo besteht, ausgewählt ist, zu betreiben.

18. Spielvorrichtung (20) nach Anspruch 1 oder 2, ferner mit:
einer anderen Anzeigeeinheit (70, 83), die fähig ist, Videobilder zu erzeugen,
wobei die Steuerung (100) mit der anderen Anzeigeeinheit (70, 83) wirksam gekoppelt ist,
die Steuerung (100) programmiert ist, um zu bewirken, dass die andere Anzeigeeinheit (70, 83) ein erstes Bild, das dem Spiel zugeordnet ist, anzeigt,
und die Steuerung (100) programmiert ist, um zu bewirken, dass die Anzeigeeinheit (70, 83) ein zweites Bild, das dem Spiel zugeordnet ist, anzeigt, wobei das zweite Bild durch das transparente Schalterglied (66) sichtbar ist.

19. Spielvorrichtung (20) nach Anspruch 18, bei der das transparente Schalterglied (66) eine Polyurethan-Linse aufweist, die aufgebaut ist, um das zweite Bild zu vergrößern.

20. Spielvorrichtung (20) nach Anspruch 18, bei der die Steuerung (100) ferner programmiert ist, um das zweite Bild basierend auf einer Einrichtungseingabe, die das Kasinospiel zeigt, aus einer Mehrzahl von Bildern auszuwählen.

21. Spielvorrichtung (20) nach Anspruch 18, bei der die Steuerung (100) ferner programmiert ist, um das zweite Bild periodisch zu ändern.

## Revendications

1. Machine de jeu (20) comprenant :
une unité d'affichage (70, 83) qui est capable de générer des images vidéo ;
un périphérique d'entrée de valeurs (52, 54, 56, 58) ;
une surface d'écran tactile (87) transparente couvrant au moins une partie de l'unité d'affichage (70, 83) ;
un élément de commutation (66) transparent couvrant au moins une partie de la surface d'écran tactile (87), l'élément de commutation (66) transparent étant structuré pour éviter un contact avec la surface d'écran tactile (87) transparente lorsque l'élément de commutation (66) transparent est dans une première position, l'élément de commutation (66) transparent étant structuré pour entrer en contact avec la surface d'écran tactile (87) transparente lorsque l'élément de commutation (66) transparent est dans une deuxième position ;
l'élément de commutation (66) transparent ayant une partie de réaction tactile (85) qui fournit une réaction tactile, dans lequel la partie de réaction tactile (85) retourne à sa position originale après chaque pression, la partie de réaction tactile (85) ayant un contact d'écran tactile (91) pour toucher la surface d'écran tactile (87) transparente dans la deuxième position et la machine (20) étant adaptée pour que, lorsque ledit contact (91) touche ladite surface (87), un signal d'entrée soit transmis à un contrôleur (100),
ledit contrôleur (100) étant opérativement couplé à l'unité d'affichage (70, 83), au périphérique d'entrée de valeurs (52, 54, 56, 58), et à la surface d'écran tactile (87) transparente, le contrôleur (100) comprenant un processeur (104) et une mémoire (103, 106) opérativement couplés au processeur (104),
le contrôleur (100) étant programmé pour causer la génération d'un indicateur d'entrée au niveau de la partie de l'unité d'affichage (70, 83) couverte par la surface d'écran tactile (87) transparente, l'indicateur d'entrée étant visible par l'intermédiaire de l'élément de commutation (66) transparent, l'indicateur d'entrée représentant une partie de l'un des jeux suivants : poker vidéo, black jack vidéo, machines à sous vidéo, kéno vidéo ou bingo vidéo,
le contrôleur (100) étant programmé pour recevoir un signal d'entrée généré en réponse au mouvement de l'élément de commutation (66) transparent depuis la première position jusqu'à la deuxième position.

2. Machine de jeu (20) comme définie dans la revendication 1, comprenant en outre :
des rouleaux de machines à sous ; et
dans laquelle le contrôleur (100) est opérativement couplé aux rouleaux de machines à sous, à l'unité d'affichage (70, 83), au périphérique d'entrée de valeurs (52, 54, 56, 58), et à la surface d'écran tactile (87) transparente.

3. Machine de jeu (20) comme définie dans la revendication 1 ou 2, dans laquelle l'élément de commutation (66) transparent comprend une lentille en polyuréthanne.

4. Machine de jeu (20) comme définie dans la revendication 3, dans laquelle la lentille en polyuréthanne est structurée pour agrandir l'indicateur d'entrée.

5. Machine de jeu (20) comme définie dans la revendication 1 ou 2, dans laquelle l'élément de commutation (66) transparent comprend une membrane en silicium pliable.

6. Machine de jeu (20) comme définie dans la revendication 5, dans laquelle la lentille en polyuréthanne est structurée pour agrandir l'indicateur d'entrée.

7. Machine de jeu (20) comme définie dans la revendication 1 ou 2, dans laquelle l'unité d'affichage (70, 83) comprend un affichage à cristaux liquides.

8. Machine de jeu (20) comme définie dans la revendication 1 ou 2, dans laquelle l'unité d'affichage (70, 83) comprend un tube à rayon cathodique.

9. Machine de jeu (20) comme définie dans la revendication 1 ou 2, dans laquelle le contrôleur (100) est en outre programmé pour amener l'indicateur d'entrée à afficher une première image durant une partie d'un premier jeu de casino et une deuxième image durant une partie d'un deuxième jeu de casino, la première image étant différente de la deuxième image, le premier jeu de casino étant différent du deuxième jeu de casino.

10. Machine de jeu (20) comme définie dans la revendication 1 ou 2, dans laquelle le contrôleur (100) est en outre programmé pour amener l'indicateur d'entrée à afficher une première image durant un premier mode d'un jeu de casino et une deuxième image durant un deuxième mode du jeu de casino, la première image étant différente de la deuxième image, le premier mode étant différent du deuxième mode.

11. Machine de jeu (20) comme définie dans la revendication 1 ou 2, dans laquelle le contrôleur (100) est en outre programmé pour amener l'indicateur d'entrée à changer périodiquement.

12. Machine de jeu (20) comme définie dans la revendication 1 ou 2, dans laquelle la surface d'écran tactile (87) transparente comprend une surface d'écran tactile (87) résistive.

13. Machine de jeu (20) comme définie dans la revendication 1 ou 2, dans laquelle la surface d'écran tactile (87) transparente comprend une surface d'écran tactile (87) capacitive.

14. Machine de jeu (20) comme définie dans la revendication 1 ou 2, dans laquelle l'unité d'affichage (70, 83) comprend une partie de non entrée, dans laquelle la surface d'écran tactile (87) transparente ne couvre pas la partie de non entrée.

15. Système de jeu (10) comprenant une pluralité de machines de jeu (20) comme définies dans la revendication 1 ou 2, les machines de jeu (20) étant interconnectées pour former un réseau (12) de machines de jeu (20).

16. Système de jeu (10) comme défini dans la revendication 15, dans lequel les machines de jeu (20) sont interconnectées via Internet.

17. Machine de jeu (20) comme définie dans la revendication 1 ou 2, dans laquelle le contrôleur (100) est en outre programmé pour opérer un jeu sélectionné à partir du groupe de jeux constitué par le poker vidéo, le black jack vidéo, les machines à sous vidéo, le kéno vidéo et le bingo vidéo.

18. Machine de jeu (20) comme définie dans la revendication 1 ou 2, comprenant en outre :
une autre unité d'affichage (70, 83) capable de générer des images vidéo,
dans laquelle le contrôleur (100) est opérativement couplé à l'autre unité d'affichage (70, 83), le contrôleur (100) étant programmé pour amener l'unité d'affichage (70, 83) à afficher une première image associée au jeu,
le contrôleur (100) étant programmé pour amener l'unité d'affichage (70, 83) à afficher une deuxième image associée au jeu, la deuxième image étant visible par l'intermédiaire de l'élément de commutation (66) transparent.

19. Machine de jeu (20) comme définie dans la revendication 18, dans laquelle l'élément de commutation (66) transparent comprend une lentille en polyuréthanne structurée pour agrandir la deuxième image.

20. Machine de jeu (20) comme définie dans la revendication 18, dans laquelle le contrôleur (100) est en outre programmé pour sélectionner la deuxième image à partir d'une pluralité d'images sur la base d'une entrée de configuration indicatrice du jeu de casino.

21. Machine de jeu (20) comme définie dans la revendication 18, dans laquelle le contrôleur (100) est en outre programmé pour changer périodiquement la deuxième image.
